# FASCICULE DE BREVET EUROPEEN

(11) **EP 2 582 536 B1**
(45) Date de publication et mention de la délivrance du brevet: **14.03.2018**
(21) Numéro de dépôt: 11735495.1
(22) Date de dépôt: 15.06.2011
(51) Int. Cl.: B60J 10/70

(54) **VITRAGE COMPRENANT UN INSERT A ELEMENT DE PRESSION, PROCEDE DE FABRICATION DU VITRAGE ET INSERT POUR LE VITRAGE.**
GLASSCHEIBE MIT EINEM EINSATZ MIT DRUCKELEMENT, VERFAHREN ZUR HERSTELLUNG DER GLASSCHEIBE UND EINSATZ FÜR DIE GLASSCHEIBE
GLASS PANEL INCLUDING AN INSERT HAVING A PRESSURE ELEMENT, METHOD FOR MANUFACTURING THE GLASS PANEL, AND INSERT FOR THE GLASS PANEL

(30) Priorité: 16.06.2010 FR 1054765
(43) Date de publication de la demande: 24.04.2013
(73) Titulaire: Saint-Gobain Glass France, 92400 Courbevoie (FR)
(72) Inventeur: GRANDGIRARD, Bastien, F-60490 Marqueglise (FR); FROISSARD, Loïc, F-60750 Choisy-au-Bac (FR); GONNET, Romain, F-60610 Lacroix Saint Ouen (FR)
(74) Mandataire: Saint-Gobain Recherche
(86) Numéro de dépôt international: PCT/FR2011/051351
(87) Numéro de publication internationale: WO 2011/157945

(56) Documents cités:
- EP-A1- 0 526 327
- EP-A1- 2 133 227
- EP-A2- 0 242 223
- FR-A1- 2 916 380

## Description

La présente invention concerne un vitrage comprenant un élément vitré, une portion de joint profilé et au moins un insert, ce vitrage étant destiné à être positionné et/ou fixé sur une structure, notamment un élément de carrosserie automobile, au moyen d'au moins un insert. Elle concerne également un procédé de fabrication d'un tel vitrage, ainsi que l'insert utilisé à cette fin.

Il est connu en effet pour positionner et/ou assurer la fixation d'un vitrage sur une structure, notamment une carrosserie d'automobile, de faire appel à au moins un pion et de préférence plusieurs pions, ou insert(s), que l'on solidarise préalablement au vitrage en le(s) noyant en partie dans un enrobage en matière plastique, au cours d'une opération dite d'encapsulation.

Pour réaliser une telle opération on dispose le vitrage et l'insert ou les inserts dans un moule, dans la position relative désirée, puis une matière plastique appropriée, par exemple du polypropylène, est injectée dans la cavité de moulage du moule de façon à encapsuler une partie du (ou des) insert (s) sur le vitrage afin de le(s) solidariser à ce dernier.

De tels inserts comportent habituellement trois parties, à savoir une partie centrale plane, ou embase, de part et d'autre de laquelle s'étendent respectivement une partie formant une zone active et qui est destinée à coopérer avec l'élément de carrosserie, et une partie surmoulée dans la matière constitutive du cordon profilé et qui comporte un élément dit de pression ainsi qu'expliqué ci-après.

Un insert peut ainsi comporter une semelle qui est surmoulée dans ladite portion de joint profilé et qui supporte une embase présentant un axe central et présentant une face libre située en dehors de ladite portion de joint profilé ainsi qu'un élément de pression qui est solidaire de l'insert en au moins une zone de liaison et qui s'étend entre la semelle et l'élément vitré en appui sur celui-ci.

Au cours de l'opération d'encapsulation on vient enrober l'embase, la semelle et l'élément de pression de l'insert dans la matière d'encapsulation et on fait en sorte que sa partie active se trouve dégagée de cette matière d'encapsulation. Pour ce faire, on dispose l'insert dans un moule de façon que sa partie active soit isolée dans une cavité de positionnement fermée de celui-ci et que son embase ainsi que la partie de l'élément vitré à enrober prennent place dans une autre cavité du moule, dite cavité de moulage, dans laquelle on injecte la matière d'encapsulation.

Une première difficulté tient au fait, qu'habituellement, les vitrages d'un véhicule et en particulier d'un véhicule automobile ont des formes complexes telles qu'elles nécessitent de faire appel à des inserts spécifiques dont la forme et la dimension de l'élément de pression sont fonction de leur positionnement sur le vitrage. Il peut alors être nécessaire, pour un modèle de vitrage (c'est-à-dire une série de vitrages), de disposer de plusieurs inserts de formes différentes, ce qui complique la mise en oeuvre de l'opération de surmoulage dans la mesure où chacun des inserts doit être repéré et positionné individuellement pour chaque vitrage.

Une seconde difficulté provient de ce que l'étanchéité entre la cavité de moulage et la cavité de positionnement isolée n'est pas toujours parfaitement assurée si bien que, lors de l'injection, il arrive que le produit injecté ait tendance à passer de la cavité de moulage à la cavité de positionnement, avec pour effet d'enrober partiellement la partie active de l'insert, ce qui a pour conséquence d'engendrer des problèmes ultérieurs de positionnement et/ou des difficultés de fixation de celle-ci, si bien que l'ensemble du vitrage risque d'être déclassé en pièce défectueuse.

Afin de pallier cet inconvénient la demande de brevet européen N° EP 0468713, propose de disposer autour de la partie active de positionnement, avant l'opération d'encapsulation, un joint en élastomère qui, lorsque l'insert se trouve en position dans le moule, se trouve appliqué en périphérie de la cavité de positionnement, si bien qu'il constitue un joint étanche entre cette cavité et la cavité de moulage, préservant ainsi la partie active de l'insert lors de l'injection. Outre le fait qu'une telle disposition n'est pas toujours efficace, elle présente par ailleurs l'inconvénient de compliquer le processus de fabrication.

La demande de brevet européen N° EP 242 223 montre un vitrage conforme au préambule de la revendication 1.

La demande internationale de brevet N° WO 2008/145938 propose de faire appel à un insert comportant une embase disposée sur une semelle de plus grande largeur, aux deux extrémités de laquelle sont respectivement disposées deux pattes élastiques qui, lors de l'opération de surmoulage, appliquent l'embase supportant la partie active de l'insert contre l'entrée de la cavité de positionnement par contre-réaction sous l'effet de la poussé de l'élément vitré.

Il se trouve que si dans les dispositions où l'élément vitré est sensiblement parallèle à la semelle (ou l'embase), la force d'application exercée par les pattes a bien pour effet d'appliquer de façon régulière l'embase de l'insert contre la périphérie de l'entrée de la cavité de positionnement, il n'en est plus ainsi lorsque la surface de l'élément vitré est inclinée par rapport à la semelle ou par rapport à l'embase.

La présente invention a pour but de remédier à ces inconvénients en proposant un vitrage dont la forme de l'élément de pression d'au moins un insert, et de préférence de tous les inserts, soit telle que cet (ou ces) insert(s) puisse(nt) être utilisé (s) quelle que soit leur position sur le vitrage en permettant de réaliser une encapsulation du type précédemment décrit, et qui évite(nt) l'entrée de la matière d'encapsulation dans la cavité de positionnement de l'insert et ceci sans prévoir un joint d'étanchéité.

La présente invention a ainsi pour objet un vitrage selon la revendication 1. Ve vitrage comprend un élément vitré, une portion de joint profilé et au moins un insert présentant une partie surmoulée située dans ladite portion de joint profilé et une partie saillante située en dehors de ladite portion de joint profilé pour le positionnement et/ou la fixation dudit vitrage sur un élément de structure, notamment un élément de carrosserie d'un véhicule, ledit insert comportant une semelle qui est surmoulée dans ladite portion de joint profilé et qui supporte une embase présentant un axe central et présentant une face libre située en dehors de ladite portion de joint profilé ainsi qu'un élément de pression qui est solidaire de l'insert en au moins une zone de liaison et qui s'étend entre la semelle et l'élément vitré en appui sur celui-ci, ledit vitrage étant remarquable en ce que l'élément de pression est en outre appliqué contre la semelle ou contre l'embase en au moins une zone d'appui (qui est différente de la zone de liaison) qui est située sous l'embase, entre l'embase et l'élément vitré. La zone d'appui n'est pas nécessairement juste au-dessous de l'embase : la semelle est, de préférence, présente entre la zone d'appui et l'embase et l'élément de pression est alors appliqué contre la semelle. La zone d'appui est unique, quel que soit le nombre de zone(s) de liaison.

Ainsi, l'élément de pression qui est lié à l'insert prend appui contre l'élément vitré et est appliqué contre l'embase ou la semelle ; par « appliqué » au sens de la présente invention, il faut comprendre qu'il y a un contact physique qui est crée, avec transmission d'une force : dans la zone d'appui, l'élément de pression est bien séparé physiquement de l'embase ou de la semelle contre laquelle il est en contact et applique une force respectivement contre l'embase ou la semelle.

Préférentiellement, la zone d'appui de l'élément de pression est située sensiblement dans le prolongement de l'axe central de l'embase. Ainsi, la force appliquée par l'élément de pression dans la zone d'appui contre l'embase ou de la semelle est une force orientée sensiblement selon l'axe central de l'embase.

Préférentiellement par ailleurs, la semelle et l'embase sont chacune sensiblement plate ; l'embase est de préférence un disque circulaire et la semelle est de préférence un disque circulaire ou ovale. La semelle et l'embase présentent de préférence chacune un axe central et ces axes sont de préférences confondus.

Généralement la semelle dépasse autour de l'embase afin d'augmenter l'ancrage de l'insert dans l'encapsulation. Afin d'améliorer encore cet ancrage, cette surface peut être percée d'au moins un orifice réalisant un ancrage avec ce dernier. Bien entendu dans une variante de l'invention l'embase et la semelle peut avoir mêmes formes et dimensions.

L'élément de pression peut être constitué d'une seule patte déformable élastique dont une première extrémité est liée à la semelle en la zone de liaison et dont une seconde extrémité est appliquée par le vitrage contre la semelle ou contre l'embase en la zone d'appui.

La semelle peut ainsi présenter un contour périphérique de dimension supérieure au contour périphérique de l'embase, ladite semelle comportant de préférence au moins un orifice traversant son épaisseur ; Ladite semelle pouvant dans ce cas ne pas être présente sous la totalité de l'embase, mais sous une partie seulement de l'embase : par exemple à la périphérie de l'embase seulement.

Toutefois, il est aussi possible que la semelle présente le même contour périphérique que l'embase ; la semelle et l'embase sont ainsi confondues ; sinon : un épaulement périphérique complet ou partiel peut-être ménagé entre la semelle et l'embase.

L'élément de pression est, de préférence, constitué d'au moins une patte et, de préférence encore est constitué d'au moins une paire de pattes coplanaires qui sont disposées symétriquement par rapport à l'axe central de l'embase, chaque patte étant de préférence orientée par rapport à ladite semelle dans la zone de liaison en direction de l'axe central de l'embase d'un angle compris entre 20° et 80°, voire entre 30° et 60°.

La patte, ou chaque patte, est déformable plastiquement. Lorsque l'élément de pression comporte plusieurs pattes, chaque patte présente une zone de liaison avec l'insert, mais, en tout et pour tout, une seule zone d'appui est crée, c'est-à-dire que toutes les pattes viennent en contact avec la semelle (ou le cas échéant l'embase) au même endroit.

Le terme « plastiquement » s'entend ici du comportement de formation sous l'effet d'une charge : une fois la charge supprimée, l'élément concerné conserve sa déformation et ne reprend pas sa configuration initiale.

Dans une variante préférée, chaque patte comporte deux branches : une première branche inclinée s'écartant de ladite semelle et une seconde branche qui prolonge la première et qui est inclinée en direction de la semelle, l'angle entre lesdites deux branches d'une patte étant de préférence compris entre 80° et 100°.

Dans cette variante, la seconde branche présente, de préférence, une longueur inférieure à la première branche, la seconde branche présentant, de préférence encore, une longueur sensiblement égale à la moitié de la première branche.

Les extrémités de deux secondes branches d'une paire de pattes coplanaires sont, de préférence, liées entre elles.

L'invention trouve une application toute spécifique lorsque l'angle entre la face libre et une face adjacente de l'élément vitré est compris entre 0° et 40° en incluant ces valeurs, voire est compris 0° et 40° en excluant 0° et en particulier lorsque cet angle est compris entre 5° et 40° en incluant ces valeurs, voire entre 7° et 30° en incluant ces valeurs.

C'est-à-dire que l'invention peut être utilisée lorsque l'angle entre l'axe central général de l'insert est perpendiculaire à l'élément vitré en son intersection avec la face adjacente de l'élément vitré, mais trouve un intérêt tout particulier lorsque l'axe central général de l'insert n'est pas perpendiculaire à l'élément vitré en son intersection avec la face adjacente de l'élément vitré.

Préférentiellement, si le vitrage comporte plusieurs inserts, il comportera au moins deux inserts selon l'invention, les parties saillantes desdits inserts étant orientées dans l'espace selon des axes non parallèles.

Ainsi, les embases respectives des deux inserts au moins présentent des axes centraux non parallèles dans l'espace.

La présente invention a également pour objet un procédé de fabrication d'un vitrage suivant l'invention, ledit vitrage comprenant un élément vitré, une portion de joint profilé et au moins un insert présentant une partie surmoulée située dans ladite portion de joint profilé et une partie saillante située en dehors de ladite portion de joint profilé pour le positionnement et/ou la fixation dudit vitrage sur un élément de structure, notamment un élément de carrosserie d'un véhicule, ledit insert comportant une semelle qui supporte une embase présentant un axe central et présentant une face libre ainsi qu'un élément de pression qui est solidaire de l'insert en au moins une zone de liaison, ledit procédé comportant successivement au moins les étapes suivantes :
- disposer l'élément vitré dans une première partie d'un moule,
- disposer l'insert dans une seconde partie du moule, de façon que la partie saillante soit positionnée dans une cavité de positionnement ménagée dans cette seconde partie de moule et que la face libre de son embase soit en appui sur la périphérie de l'entrée de la cavité de positionnement,
- refermer les deux parties de moule, de façon à former une cavité de moulage, (pour isoler la cavité de positionnement de la cavité de moulage),
- injecter dans la cavité de moulage une matière plastique constitutive dudit cordon profilé pour surmouler sur l'élément vitré : la semelle, l'embase et l'élément de pression qui s'étend entre la semelle et l'élément vitré en appui sur celui-ci ; la face libre et la partie saillante étant située en dehors de ladite portion de joint profilé.

Le procédé selon l'invention est remarquable en ce que, pendant la fermeture du moule, l'élément de pression est déformé et est appliqué contre la semelle ou contre l'embase en au moins une zone d'appui qui est située sous l'embase, entre l'embase et l'élément vitré.

La zone d'appui de l'élément de pression est, de préférence, située sensiblement dans le prolongement de l'axe central de l'embase.

Si le vitrage comporte au moins deux inserts selon les parties saillantes desdits inserts sont alors orientées, de préférence, avant le moulage, dans des cavités de positionnement de ladite seconde partie de moule selon des axes non parallèles. Il est également décrit un insert pour un vitrage selon l'invention, pour le positionnement et/ou la fixation du vitrage sur un élément de structure, notamment un élément de carrosserie d'un véhicule, ledit insert comportant une semelle qui supporte une embase présentant un axe central et présentant une face libre ainsi qu'un élément de pression qui est solidaire de l'insert en au moins une zone de liaison.

Comme indiqué précédemment, l'élément de pression est constitué d'au moins une patte et, de préférence encore est constitué d'au moins une paire de pattes coplanaires qui sont disposées symétriquement par rapport à l'axe central de l'embase, la ou chaque patte étant de préférence orientée par rapport à ladite semelle dans la zone de liaison en direction de l'axe central de l'embase d'un angle compris entre 20° et 80°, voire entre 30° et 60°. La patte, ou chaque patte, est, de préférence, déformable plastiquement.

Ainsi, si le cordon profilé d'un vitrage selon l'invention est retiré, chacun peut constater que la configuration de l'élément de pression à l'intérieur du cordon profilé est différente de la configuration d'un élément de pression avant son incorporation dans le cordon profilé.

Avantageusement, l'élément de pression selon l'invention permet de mettre en appui l'insert contre une face adjacente de l'élément vitré et d'appliquer une force de contre-réaction contre l'embase (ou la semelle), afin de maintenir efficacement l'embase contre l'entrée de la cavité de positionnement et assurer ainsi l'étanchéité.

L'application de cette force de contre-réaction dans la direction de l'axe central de l'embase permet d'atteindre une étanchéité parfaite tout autour du contact entre l'embase et l'entrée de la cavité de positionnement de la partie saillante de l'insert.

On décrira ci-après, à titre d'exemple non limitatif, plusieurs formes d'exécution de la présente invention, en référence au dessin annexé sur lequel :
- la figure 1 est une vue en coupe partielle axiale d'un premier mode de réalisation d'un insert suivant l'invention,
- la figure 2 est une vue en coupe axiale de l'insert représenté sur la figure 1, après son positionnement dans une partie de moule, après la mise en place de celui-ci et après la phase d'injection,
- la figure 3 est une vue de dessus d'une autre variante de réalisation d'un insert suivant l'invention,
- la figure 4 est une vue en plan d'une autre variante de réalisation d'un insert suivant l'invention,
- la figure 5 est une vue schématique illustrant les forces lors de la fermeture du moule pour un insert à deux pattes déformables,
- la figure 6 est une vue de face d'un autre mode de réalisation d'un insert suivant l'invention,
- la figure 7 est une vue en coupe axiale de l'insert représenté sur la figure 6 qui est positionné dans une partie de moule, après la mise en place de l'élément de vitrage et après la phase d'injection,
- la figure 8 est une vue en coupe partielle d'un vitrage selon l'invention qui est fixé sur un élément de carrosserie au moyen d'un insert du type de celui représenté sur les figures 6 et 7,
- les figures 9 et 10 représentent une autre variante de réalisation d'un insert, respectivement représentée de face et en vue de dessous.

Dans ces figures, les proportions entre les différents éléments sont respectées et les éléments en arrière plan ne sont en général pas représentés, afin de faciliter leur lecture.

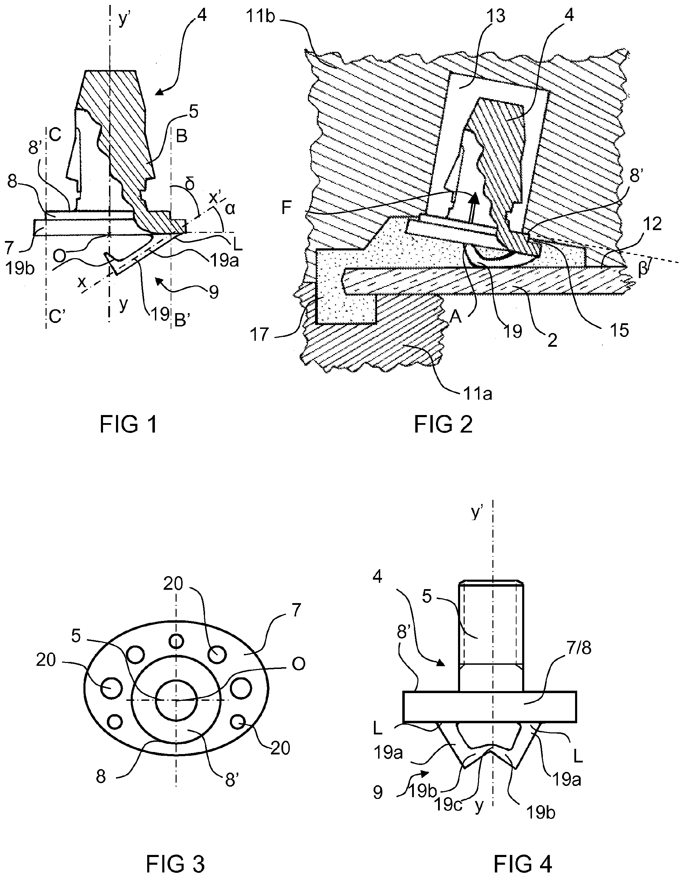

On a représenté sur les figures 1 et 2 un insert 4 suivant l'invention qui est destiné à être monté sur un élément vitré 2. Cet insert comprend une partie saillante 5, cylindrique, d'axe central yy' qui constitue sa partie active et qui se termine à son extrémité libre par une partie tronconique destinée à faciliter son positionnement dans l'orifice de la pièce sur laquelle un vitrage 1 doit être monté et notamment sur un élément de carrosserie. La partie saillante 5 est pourvue d'ailes latérales qui sont destinées à assurer le clipsage avec l'élément de carrosserie.

A son autre extrémité la partie saillante 5 est reliée à une embase 8 plane, de forme circulaire qui, dans le présent mode de mise en oeuvre de l'invention surmonte une semelle 7 également plane et circulaire et de plus grand diamètre que l'embase. L'épaisseur de la semelle est ici de 2 mm et l'épaisseur de l'embase est de 1 mm.

Sur la figure 1, qui illustre l'insert avant son utilisation, la face inférieure de la semelle 7 supporte un élément de pression qui est constitué d'une patte 19 dont une première branche 19a est orientée dans une zone de liaison L avec l'insert selon un axe xx' qui est inclinée par rapport au plan de la semelle 7 d'un angle α d'environ 30° et dont une seconde branche 19b, formée par son extrémité libre, est sensiblement perpendiculaire à la première, à la suite de la première partie.

Sur la figure 1, la patte est ainsi orientée par rapport à ladite semelle 7 dans la zone de liaison L en direction de l'axe yy' central de l'embase 8 d'un angle δ, complémentaire de l'angle α par rapport à 90°, cet angle δ étant d'environ 60°.

L'axe central yy' est aussi l'axe central général de l'insert.

Ainsi que représenté sur la figure 2, pour assurer l'encapsulation de l'insert 4 sur l'élément vitré 2, on procède successivement ainsi que décrit ci-après :
- l'élément vitré 2 est disposé dans une partie inférieure 11a d'un moule,
- l'(ou les différents) insert(s) 4 est (ou sont) disposé(s chacun) dans une cavité 13 prévue dans une partie supérieure 11b du moule. Préférentiellement, ainsi que représenté sur la figure 2, l'entrée de cette cavité est creusée d'une rainure circulaire 15 correspondant aux dimensions de l'embase 8, de façon que celle-ci vienne s'ajuster dans cette rainure. On crée ainsi une sorte de chicane permettant d'améliorer l'étanchéité de la cavité 13,
- le moule est fermé. Au cours de cette opération la patte 19 est repoussée par l'élément vitré 2 et se déforme si bien que son extrémité libre vient en contact avec la semelle 7 et vient exercer sur la semelle 7 une force qui a pour effet d'appliquer la périphérie de l'embase 8, c'est-à-dire la surface libre 8', de l'insert 4 contre le fond de la rainure 15. On déterminera la longueur de la première partie de la patte 19 pour que l'extrémité libre de celle-ci vienne s'appuyer sur la semelle 7 et plus précisément contre la face de la semelle tournée vers l'élément vitré 2 et dans une zone d'application ou d'appui A de celle-ci qui se situe sous l'embase, c'est-à-dire dans une zone qui est comprise entre les traits mixtes BB' et CC' sur la figure 1. Préférentiellement on donne à cette première partie de la patte 19 une longueur telle que la zone d'appui A se situe à proximité du centre O de l'embase 8, déporté le long de l'axe yy' à l'extrémité inférieure de la semelle 7.

Bien entendu on donne à la patte 19 de l'insert les dimensions appropriées lui permettant, au cours de cette déformation d'appliquer la face supérieure de l'embase 8 contre le fond de la rainure circulaire 15 avec une force F (illustrée par la double flèche) dont l'orientation est ainsi contrôlée et dont la valeur est également contrôlée par le choix de la matière de la patte et par ses dimensions. On peut jouer ainsi préférentiellement sur la première branche 19a, droite, de la patte 19 ainsi que sur le module d'élasticité du matériau constituant l'insert et plus particulièrement la patte 19, de façon que la force de déformation exercée par l'élément vitré 2 sur celle-ci soit inférieure à celle ayant pour effet de briser ou détériorer l'élément vitré tout en étant suffisante pour assurer une bonne étanchéité de la cavité de positionnement 13 contre le fluage à l'intérieur de celle-ci du matériau injecté,
- la matière plastique est injectée dans la cavité de moulage 17.

Bien entendu, bien que la plupart du temps les éléments constitutifs de l'insert 4, à savoir sa partie active 3, sa semelle 7, son embase 8, et sa patte 19 soient formés d'une seule pièce, ces éléments peuvent également, dans une variante de la présente invention, être formés de plusieurs pièces assemblées pouvant être réalisées en matière plastique ou en métal et ceci en fonction des contraintes propres auquel l'insert risque d'être soumis.

L'embase 8 aura habituellement une forme circulaire, mais la semelle 7 peut avoir toute forme appropriée au type de vitrage concerné. Ainsi que représenté sur la figure 3 la semelle 7 peut par exemple avoir une forme elliptique et son centre peut être différent du centre O de l'embase 8. Par ailleurs, afin d'améliorer l'ancrage de l'insert 4 dans la matière plastique de l'enrobage, la semelle 7 peut être percée d'orifices 20 dont la forme et la dimension seront fonction de leur disposition sur la semelle 7.

La présente invention est particulièrement intéressante en ce qu'elle s'applique non seulement aux vitrages dont l'embase 8 de l'insert 4 est parallèle à celui-ci, mais également aux vitrages pour lesquels l'embase 8, voire aussi la semelle 7, ne sont pas parallèles à l'élément vitré 2 ainsi que représenté sur les figures.

Bien entendu, l'insert 4 peut comporter plusieurs pattes, notamment des pattes 19 disposées par paires dans un même plan, de façon symétrique par rapport à l'axe central yy' de l'insert.

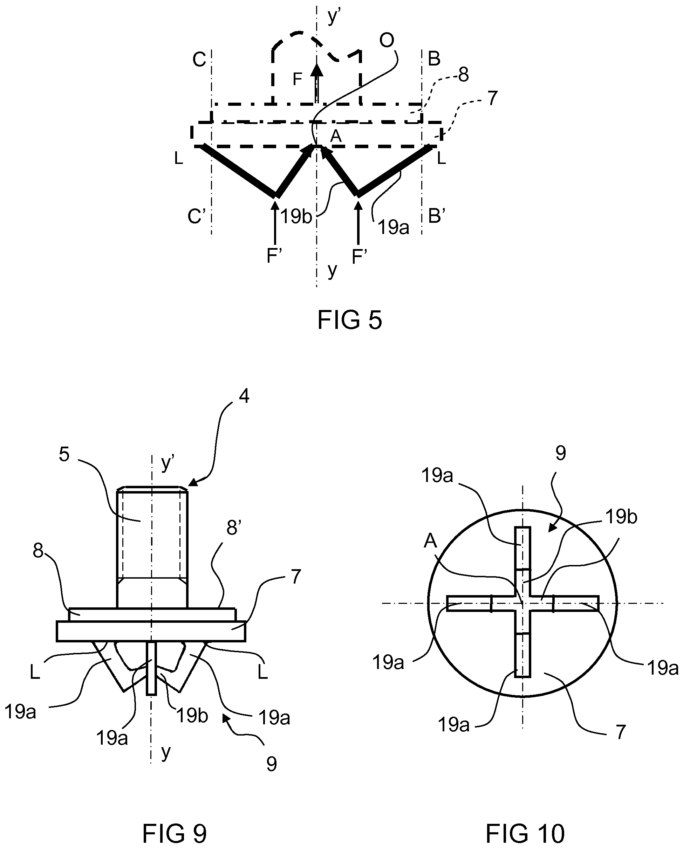

Dans une variante de l'invention qui est représentée sur la figure 4, ainsi que sous forme schématique sur la figure 5, l'élément de pression 9 comporte deux pattes 19 et la semelle 7 et l'embase 8 ont la même forme et les mêmes dimensions périphériques, et sont ainsi confondues.

• On fait en sorte de donner aux branches 19a et 19b formant ces pattes des longueurs telles que la zone d'appui A de celles-ci sous la semelle 7 (et indirectement sous l'embase 8), se situe sous l'embase 8, et préférentiellement à proximité du centre O de l'embase 8, lorsqu'elles se déforment sous l'action des forces F' exercées par l'élément vitré 2. Ainsi, la force résultante F (illustrée par la double flèche) dans cette zone d'appui A est bien orientée selon l'axe central yy'.

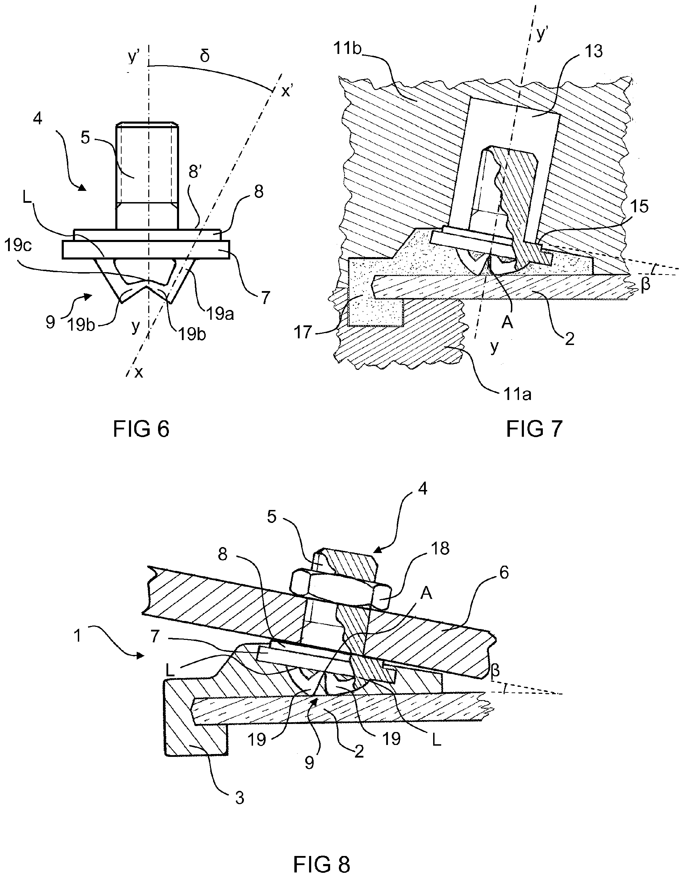

Dans une variante de l'invention qui est représentée sur les figures 6 à 8, l'insert 4 comporte une partie saillante 5, cylindrique, qui est pourvue d'un filetage, ce qui permet, une fois le surmoulage des inserts 4 réalisé, et ainsi que représenté sur la figure 8, de fixer le vitrage 1 sur une carrosserie 6 d'un véhicule au moyen d'un écrou 18. Dans ce mode de mise en oeuvre de l'invention l'élément de pression est constitué de deux pattes disposées dans un même plan axial qui sont symétriques par rapport à l'axe central yy', comme en figures 4 et 5.

Chaque patte 19 est formée d'une première branche 19a qui est solidaire de la semelle 7 en une zone L de liaison se situant à environ la moitié du diamètre de celle-ci, et est inclinée vers l'intérieur suivant un axe xx' formant un angle δ d'environ 30° avec l'axe central yy'. Ces deux premières branches se prolongent par deux secondes branches 19b de moindre longueur qui remontent vers la semelle 7 et se rejoignent à mi-distance de celles-ci, de façon à former un W.

Les secondes branches 19b forment entre elles, en leur liaison 19c, un angle d'environ 90°.

Ainsi que représenté sur les figures 6 et 7, les premières branches 19a peuvent avoir une section sensiblement constante, alors que les secondes branches 19b vont en s'amincissant lorsque l'on va des premières branches vers la liaison 19c entre les deux secondes branches 19b.

On a constaté qu'une telle géométrie en forme de W de l'élément de pression 9 de l'insert permettait, pour des efforts exercés sur celui-ci par un élément vitré dont une face 12 forme avec la face libre 8' un angle β, de générer une déformation de l'élément de pression telle que la zone d'appui d'application de ce dernier sur la semelle (ou l'embase) se situe à proximité du centre O de celle-ci. On obtient ainsi une application régulière de la face supérieure de l'embase 8 sur le fond de la rainure 15, ce qui garantit une bonne étanchéité.

Cet angle β est, de préférence, compris entre 0° et 40° en incluant ces valeurs, voire est compris 0° et 40° en excluant 0° et en particulier est compris entre 5° et 40° en incluant ces valeurs, voire entre 7° et 30° en incluant ces valeurs.

La présente invention permet ainsi d'utiliser des inserts identiques tout au long de la périphérie d'un vitrage, même lorsque celui-ci est bombé.

La présente invention permet ainsi, contrairement aux inserts de l'état antérieur de la technique qui nécessitent de réaliser différents modèles spécifiques en fonction de l'angle formé par l'élément de vitrage avec la semelle de l'insert, de positionner des inserts identiques en des zones du vitrage qui ne sont pas symétriques ou de positionner des inserts identiques sur un vitrage non symétrique (vitrage custode par exemple).

L'insert suivant l'invention est préférablement réalisé dans des matières plastiques diverses, chargées ou non de fibres de verre, et l'on retiendra particulièrement celles dont le module d'élasticité est compris entre 200 MPa et 20 GPa et est préférentiellement compris entre 1 et 10 GPa.

On peut notamment faire appel à du polypropylène (module d'élasticité = 1,8 GPa), à des polyamides (module d'élasticité = 2,5 GPa), à du polypropylène chargé de 30% de fibres de verre (module d'élasticité = 6 GPa), à des polyamides chargées de 30% de fibres de verre (module d'élasticité = 9,5 GPa), à du polyoxométhylène (module d'élasticité = 3,1 GPa) etc....

L'insert 4 selon l'invention est alors fabriqué par moulage.

A titre d'exemple, un insert suivant l'invention constitué d'un matériau dont le module d'élasticité est de l'ordre de 3 GPa et dont la surface de contact de l'embase 8 sur le moule est de 100 mm² a subi une déformation sous l'action de l'élément vitré 2 lors de la fermeture du moule, générant une force de l'ordre de 100 N, si bien que l'insert s'est trouvé appliqué contre le moule avec une pression de 1MPa. Les mesures effectuées ont montré que cette contrainte était régulièrement répartie sur la périphérie de l'embase 8 en contact avec l'entrée de la cavité de positionnement de l'insert. Par ailleurs on sait que sous une telle contrainte on considère que l'étanchéité au passage de la matière de moulage dans cette cavité de positionnement est assurée.

On peut également suivant la présente invention réaliser un élément de pression constitué de plusieurs éléments à profil en W tels que précédemment décrits, qui seraient disposés en croix, et notamment par paires selon des plans perpendiculaires, ainsi que représenté sur les figures 9 et 10.

Dans une variante particulière, non illustrée, la face de la semelle 7 tournée vers l'élément vitré 2 n'est pas plate mais présente une portion de surface qui est creusée en direction de ladite partie saillante 5. Cette portion de surface, qui se trouve ainsi en creux par rapport au reste de la surface de la face de la semelle 7 tournée vers l'élément vitré 2 peut être utilisée pour créer une zone d'appui A particulière.

Il est ainsi possible de créer un petit creux au point A de la figure 2, de la figure 7 ou de la figure 10, afin de guider la (ou les) seconde(s) branche(s) 19b pour que le contact avec la face de la semelle se réalise exactement au point souhaité.

Ce creux peut se présenter sous la forme d'un évidement circulaire en surface ou d'une rainure allongée ; sa forme en coupe peut être droite ou conique ; la profondeur du creux peut être d'au moins 1/10^{e} de mm et peut aller jusqu'à toute l'épaisseur de la semelle 7 (trou débouchant de part d'autre de la semelle).

## Revendications

1. Vitrage (1) comprenant un élément vitré (2), une portion de joint profilé (3) et au moins un insert (4) présentant une partie surmoulée située dans ladite portion de joint profilé (3) et une partie saillante (5) située en dehors de ladite portion de joint profilé (3) pour le positionnement et/ou la fixation dudit vitrage (1) sur un élément de structure, notamment un élément de carrosserie (6) d'un véhicule, ledit insert (4) comportant une semelle (7) qui est surmoulée dans ladite portion de joint profilé (3) et qui supporte une embase (8) présentant un axe central (yy') et présentant une face libre (8') située en dehors de ladite portion de joint profilé (3) ainsi qu'un élément de pression (9) qui est solidaire de l'insert (4) en au moins une zone de liaison (L) et qui s'étend entre la semelle (7) et l'élément vitré (2) en appui sur celui-ci, **caractérisé en ce que** l'élément de pression (9) est en outre appliqué contre la semelle (7) ou contre l'embase (8) en au moins une zone d'appui (A) qui est située sous l'embase (8), entre l'embase (8) et l'élément vitré (2).

2. Vitrage suivant la revendication 1, **caractérisé en ce que** la zone d'appui (A) de l'élément de pression (9) est située sensiblement dans le prolongement de l'axe central (yy') de l'embase (8).

3. Vitrage suivant la revendication 1 ou 2, **caractérisé en ce que** la semelle (7) présente le même contour périphérique que l'embase (8).

4. Vitrage suivant la revendication 1 ou 2, **caractérisé en ce que** la semelle (7) présente un contour périphérique de dimension supérieure au contour périphérique de l'embase (8), ladite semelle comportant de préférence au moins un orifice (20) traversant son épaisseur.

5. Vitrage suivant l'une quelconque des revendications 1 à 4, **caractérisé en ce que** l'élément de pression (9) est constitué d'au moins une patte (19) et, de préférence est constitué d'au moins une paire de pattes (19) coplanaires qui sont disposées symétriquement par rapport à l'axe (yy') central de l'embase (8), chaque patte étant de préférence orientée par rapport à ladite semelle (7) dans la zone de liaison (L) en direction de l'axe (yy') central de l'embase (8) d'un angle δ compris entre 20° et 80°, voire entre 30° et 60°.

6. Vitrage suivant la revendication 5, **caractérisé en ce que** chaque patte (19) comporte deux branches : une première branche (19a) inclinée s'écartant de ladite semelle (7) et une seconde branche (19b) qui prolonge la première et qui est inclinée en direction de la semelle (7), l'angle entre lesdites deux branches (19a, 19b) d'une patte étant de préférence compris entre 80° et 100°.

7. Vitrage suivant la revendication 6, **caractérisé en ce que** la seconde branche (19b) présente une longueur inférieure à la première branche (19a), la seconde branche (19b) présentant de préférence une longueur sensiblement égale à la moitié de la première branche (19a).

8. Vitrage suivant l'une quelconque des revendications 5 à 7, **caractérisé en ce que** les extrémités de deux secondes branches (19b) d'une paire de pattes coplanaires sont liées entre elles.

9. Vitrage suivant l'une quelconque des revendications 1 à 8, **caractérisé en ce que** l'angle β entre la face libre (8') et une face adjacente (12) de l'élément vitré est compris entre 0° et 40° en incluant ces valeurs, voire est compris 0° et 40° en excluant 0°, et en particulier cet angle β est compris entre 5° et 40° en incluant ces valeurs, voire entre 7° et 30° en incluant ces valeurs.

10. Vitrage suivant l'une quelconque des revendications 1 à 9, **caractérisé en ce qu'**il comporte au moins deux inserts (4), les parties saillantes (5) desdits inserts étant orientées dans l'espace selon des axes non parallèles.

11. Vitrage suivant l'une quelconque des revendications 1 à 10, **caractérisé en ce que** la face de la semelle (7) tournée vers l'élément vitré (2) présente une portion de surface creusée en direction de ladite partie saillante (5).

12. Procédé de fabrication d'un vitrage (1) suivant l'une quelconque des revendications 1 à 11, ledit vitrage (1) comprenant un élément vitré (2), une portion de joint profilé (3) et au moins un insert (4) présentant une partie surmoulée située dans ladite portion de joint profilé (3) et une partie saillante (5) située en dehors de ladite portion de joint profilé (3) pour le positionnement et/ou la fixation dudit vitrage (1) sur un élément de structure, notamment un élément de carrosserie (6) d'un véhicule, ledit insert (4) comportant une semelle (7) qui supporte une embase (8) présentant un axe central (yy') et présentant une face libre (8') ainsi qu'un élément de pression (9) qui est solidaire de l'insert (4) en au moins une zone de liaison (L),
ledit procédé comportant successivement au moins les étapes suivantes :
- disposer l'élément vitré (2) dans une première partie (11a) d'un moule,
- disposer l'insert (4) dans une seconde partie (11b) du moule, de façon que la partie saillante (3) soit positionnée dans une cavité de positionnement (13) ménagée dans cette seconde partie de moule et que la face libre (8') de son embase (8) soit en appui sur la périphérie de l'entrée de la cavité de positionnement (13),
- refermer les deux parties (11a, 11b) de moule, de façon à former une cavité de moulage (17),
- injecter dans la cavité de moulage (17) une matière plastique constitutive dudit cordon profilé (3) pour surmouler sur l'élément vitré : la semelle (7), l'embase (8) et l'élément de pression (9) qui s'étend entre la semelle (7) et l'élément vitré (2) en appui sur celui-ci ; la face libre (8') et la partie saillante (5) étant située en dehors de ladite portion de joint profilé (3)
**caractérisé en ce que,** pendant la fermeture du moule, l'élément de pression (9) est déformé et est appliqué contre la semelle (7) ou contre l'embase (8) en au moins une zone d'appui (A) qui est située sous l'embase (8), entre l'embase (8) et l'élément vitré (2).

13. Procédé de fabrication suivant la revendication 12, **caractérisé en ce que** la zone d'appui (A) de l'élément de pression (9) est située sensiblement dans le prolongement de l'axe central (yy') de l'embase (8).

14. Procédé de fabrication suivant la revendication 12 ou 13, **caractérisé en ce que** le vitrage (1) comporte au moins deux inserts (4), les parties saillantes (5) desdits inserts étant orientées avant le moulage dans des cavités de positionnement (13) de ladite seconde partie (11b) de moule selon des axes non parallèles.

## Patentansprüche

1. Glasscheibe (1) mit einem Glaselement (2), einem Profildichtungsabschnitt (3) und mindestens einem Einsatz (4), der einen umspritzten Teil, der sich in dem Profildichtungsabschnitt (3) befindet, und einen vorspringenden Teil (5), der sich außerhalb des Profildichtungsabschnitts (3) befindet, zur Positionierung und/oder Befestigung der Glasscheibe (1) an einem Strukturelement, insbesondere einem Karosserieelement (6) eines Fahrzeugs, aufweist, wobei der Einsatz (4) eine Sohle (7) umfasst, die in dem Profildichtungsabschnitt (3) umspritzt ist und die eine Fußplatte (8) trägt, die eine Mittelachse (yy') aufweist und eine freie Seite (8') aufweist, die sich außerhalb des Profildichtungsabschnitts (3) befindet, sowie ein Druckelement (9), das in mindestens einem Verbindungsbereich (L) einstückig mit dem Einsatz (4) ist und das sich zwischen der Sohle (7) und dem Glaselement (2) auf diesem aufliegend erstreckt, **dadurch gekennzeichnet, dass** das Druckelement (9) darüber hinaus in mindestens einem Auflagebereich (A), der sich unter der Fußplatte (8), zwischen der Fußplatte (8) und dem Glaselement (2), befindet, gegen die Sohle (7) oder gegen die Fußplatte (8) gedrückt ist.

2. Glasscheibe nach Anspruch 1, **dadurch gekennzeichnet, dass** sich der Auflagebereich (A) des Druckelements (9) im Wesentlichen in der Verlängerung der Mittelachse (yy') der Fußplatte (8) befindet.

3. Glasscheibe nach Anspruch 1 oder 2, **dadurch gekennzeichnet, dass** die Sohle (7) die gleiche Umfangskontur wie die Fußplatte (8) aufweist.

4. Glasscheibe nach Anspruch 1 oder 2, **dadurch gekennzeichnet, dass** die Sohle (7) eine Umfangskontur aufweist, die größer als die Umfangskontur der Fußplatte (8) ist, wobei die Sohle bevorzugt mindestens eine ihre Dicke durchquerende Öffnung (20) umfasst.

5. Glasscheibe nach einem der Ansprüche 1 bis 4, **dadurch gekennzeichnet, dass** das Druckelement (9) aus mindestens einem Anker (19) besteht und bevorzugt aus mindestens einem Paar koplanarer Anker (19) besteht, die symmetrisch in Bezug auf die Mittelachse (yy') der Fußplatte (8) angeordnet sind, wobei jeder Anker bevorzugt in Bezug auf die Sohle (7) im Verbindungsbereich (L) in Richtung der Mittelachse (yy') der Fußplatte (8) um einen Winkel δ zwischen 20° und 80° oder sogar zwischen 30° und 60° ausgerichtet ist.

6. Glasscheibe nach Anspruch 5, **dadurch gekennzeichnet, dass** jeder Anker (19) zwei Schenkel trägt: einen ersten geneigten Schenkel (19a), der sich von der Sohle (7) entfernt, und einen zweiten Schenkel (19b), der den ersten verlängert und der in Richtung der Sohle (7) geneigt ist, wobei der Winkel zwischen den beiden Schenkeln (19a, 19b) eines Ankers bevorzugt zwischen 80° und 100° beträgt.

7. Glasscheibe nach Anspruch 6, **dadurch gekennzeichnet, dass** der zweite Schenkel (19b) eine geringere Länge als der erste Schenkel (19a) aufweist, wobei der zweite Schenkel (19b) bevorzugt eine Länge aufweist, die im Wesentlichen halb so groß wie die des ersten Schenkels (19a) ist.

8. Glasscheibe nach einem der Ansprüche 5 bis 7, **dadurch gekennzeichnet, dass** die Enden von zwei zweiten Schenkeln (19b) eines Paares koplanarer Anker untereinander verbunden sind.

9. Glasscheibe nach einem der Ansprüche 1 bis 8, **dadurch gekennzeichnet, dass** der Winkel β zwischen der freien Seite (8') und einer benachbarten Seite (12) des Glaselements zwischen 0° und 40° einschließlich dieser Werte beträgt oder sogar zwischen 0° und 40° unter Ausschluss von 0° beträgt und dass dieser Winkel β insbesondere zwischen 5° und 40° einschließlich dieser Werte oder sogar zwischen 7° und 30° einschließlich dieser Werte beträgt.

10. Glasscheibe nach einem der Ansprüche 1 bis 9, **dadurch gekennzeichnet, dass** sie mindestens zwei Einsätze (4) umfasst, wobei die vorspringenden Teile (5) der Einsätze im Raum entlang von nicht parallelen Achsen ausgerichtet sind.

11. Glasscheibe nach einem der Ansprüche 1 bis 10, **dadurch gekennzeichnet, dass** die Seite der Sohle (7), die dem Glaselement (2) zugewandt ist, einen in Richtung des vorspringenden Teils (5) vertieften Oberflächenabschnitt aufweist.

12. Verfahren zur Herstellung einer Glasscheibe (1) nach einem der Ansprüche 1 bis 11, wobei die Glasscheibe (1) ein Glaselement (2), einen Profildichtungsabschnitt (3) und mindestens einen Einsatz (4) umfasst, der einen umspritzten Teil, der sich in dem Profildichtungsabschnitt (3) befindet, und einen vorspringenden Teil (5), der sich außerhalb des Profildichtungsabschnitts (3) befindet, zur Positionierung und/oder Befestigung der Glasscheibe (1) an einem Strukturelement, insbesondere einem Karosserieelement (6) eines Fahrzeugs, aufweist, wobei der Einsatz (4) eine Sohle (7) umfasst, die eine Fußplatte (8) trägt, die eine Mittelachse (yy') aufweist und eine freie Seite (8') aufweist, sowie ein Druckelement (9), das in mindestens einem Verbindungsbereich (L) einstückig mit dem Einsatz (4) ist, wobei das Verfahren nacheinander mindestens die folgenden Schritte umfasst:
- Anordnen des Glaselements (2) in einem ersten Teil (11a) einer Form,
- Anordnen des Einsatzes (4) in einem zweiten Teil (11b) der Form, so dass der vorspringende Teil (3) in einem Positionierungshohlraum (13) positioniert ist, der in diesem zweiten Formteil ausgebildet ist, und die freie Seite (8') seiner Fußplatte (8) auf dem Rand des Einlaufs des Positionierungshohlraums (13) aufliegt,
- Schließen der beiden Formteile (11a, 11b), so dass sie einen Formhohlraum (17) bilden,
- Einspritzen eines Kunststoffs, aus dem die Profildichtung (3) besteht, in den Formhohlraum (17), um Folgendes auf dem Glaselement zu umspritzen: die Sohle (7), die Fußplatte (8) und das Druckelement (9), das sich zwischen der Sohle (7) und dem Glaselement (2) auf diesem aufliegend erstreckt, wobei sich die freie Seite (8') und der vorspringende Teil (5) außerhalb des Profildichtungsabschnitts (3) befinden,
**dadurch gekennzeichnet, dass** das Druckelement (9) während des Schließens der Form verformt wird und in mindestens einem Auflagebereich (A), der sich unter der Fußplatte (8), zwischen der Fußplatte (8) und dem Glaselement (2), befindet, gegen die Sohle (7) oder gegen die Fußplatte (8) gedrückt wird.

13. Herstellungsverfahren nach Anspruch 12, **dadurch gekennzeichnet, dass** sich der Auflagebereich (A) des Druckelements (9) im Wesentlichen in der Verlängerung der Mittelachse (yy') der Fußplatte (8) befindet.

14. Herstellungsverfahren nach Anspruch 12 oder 13, **dadurch gekennzeichnet, dass** die Glasscheibe (1) mindestens zwei Einsätze (4) umfasst, wobei die vorspringenden Teile (5) der Einsätze vor dem Spritzgießen in Positionierungshohlräumen (13) des zweiten Formteils (11b) entlang von nicht parallelen Achsen ausgerichtet werden.

## Claims

1. A glazing unit (1) comprising a pane (2), a profiled seal portion (3) and at least one insert (4) having an overmolded part located in said profiled seal portion (3) and a protruding part (5) located outside said profiled seal portion (3) for said glazing unit (1) to be positioned on and/or fastened to a structural element, especially a body element (6) of a vehicle, said insert (4) comprising a baseplate (7) which is overmolded in said profiled seal portion (3) and supports a base (8) having a central axis (yy') and having a free face (8') located outside said profiled seal portion (3), and also a pressure element (9) which is firmly attached to the insert (4) in at least one bonding region (L) and extends between the baseplate (7) and the pane (2), bearing on the latter, **characterized in that** the pressure element (9) is also applied against the baseplate (7) or against the base (8) in at least one bearing region (A) which is located beneath the base (8), between the base (8) and the pane (2).

2. The glazing unit as claimed in claim 1, **characterized in that** the bearing region (A) of the pressure element (9) is located substantially in the extension of the central axis (yy') of the base (8).

3. The glazing unit as claimed in claim 1 or 2, **characterized in that** the baseplate (7) has the same peripheral outline as the base (8).

4. The glazing unit as claimed in claim 1 or 2, **characterized in that** the baseplate (7) has a peripheral outline larger in size than the peripheral outline of the base (8), said baseplate preferably having at least one hole (20) passing through the thickness thereof.

5. The glazing unit as claimed in any one of claims 1 to 4, **characterized in that** the pressure element (9) consists of at least one lug (19) and preferably consists of at least one pair of coplanar lugs (19) that are placed symmetrically with respect to the central axis (yy') of the base (8), each lug being preferably oriented relative to said baseplate (7) in the bonding region (L) at an angle δ between 20° and 80°, or even between 30° and 60°, to the direction of the central axis (yy') of the base (8).

6. The glazing unit as claimed in claim 5, **characterized in that** each lug (19) has two legs: namely a first leg (19a) which is inclined away from said baseplate (7) and a second leg (19b) which extends the first and is inclined toward the baseplate (7), the angle between said two legs (19a, 19b) of a lug being preferably between 80° and 100°.

7. The glazing unit as claimed in claim 6, **characterized in that** the second leg (19b) has a shorter length than the first leg (19a), the second leg (19b) preferably having a length substantially equal to half the length of the first leg (19a).

8. The glazing unit as claimed in any one of claims 5 to 7, **characterized in that** the ends of two second legs (19b) of a pair of coplanar lugs are bonded together.

9. The glazing unit as claimed in any one of claims 1 to 8, **characterized in that** the angle β between the free face (8') and an adjacent face (12) of the pane is between 0° and 40°, including these values, or even between 0° and 40°, excluding 0°, and in particular this angle β is between 5° and 40° including these values, or even between 7° and 30° including these values.

10. The glazing unit as claimed in any one of claims 1 to 9, **characterized in that** it comprises at least two inserts (4), the protruding parts (5) of said inserts being oriented in space along nonparallel axes.

11. The glazing unit as claimed in any one of claims 1 to 10, **characterized in that** that face of the baseplate (7) which is turned toward the pane (2) has a hollowed surface portion toward said protruding part (5).

12. A method of manufacturing a glazing unit (1) as claimed in any one of claims 1 to 11, said glazing unit (1) comprising a pane (2), a profiled seal portion (3) and at least one insert (4) having an overmolded part located in said profiled seal portion (3) and a protruding part (5) located outside said profiled seal portion (3) in order for said glazing unit (1) to be positioned on and/or fastened to a structural element, especially a body element (6) of a vehicle, said insert (4) comprising a baseplate (7) which supports a base (8) having a central axis (yy') and having a free face (8'), and also a pressure element (9) which is firmly attached to the insert (4) in at least one bonding region (L), said method comprising, in succession, at least the following steps:
- the pane (2) is placed in a first part (11a) of a mold;
- the insert (4) is placed in a second part (11b) of the mold, so that the protruding part (3) is positioned in a positioning cavity (13) provided in this second mold part and so that the free face (8') of its base (8) bears on the periphery of the entrance of the positioning cavity (13);
- the two mold parts (11a, 11b) are closed so as to form a molding cavity (17); and
- a plastic constituting said profiled sealing bead (3) is injected into the molding cavity (17) so as to overmold, onto the pane, the baseplate (7), the base (8) and the pressure element (9) that extends between the baseplate (7) and the pane (2), bearing on the latter, the free face (8') and the protruding part (5) both being outside said profiled seal portion (3),
**characterized in that,** while the mold is closed, the pressure element (9) is deformed and applied against the baseplate (7) or against the base (8) in at least one bearing region (A) which is located beneath the base (8), between the base (8) and the pane (2).

13. The manufacturing method as claimed in claim 12, **characterized in that** the bearing region (A) of the pressure element (9) is located substantially in the extension of the central axis (yy') of the base (8).

14. The manufacturing process as claimed in claim 12 or 13, **characterized in that** the glazing unit (1) includes at least two inserts (4), the protruding parts (5) of said inserts being oriented before molding in positioning cavities (13) of said second mold part (11b) along nonparallel axes.
